(19) **Europäisches Patentamt**
European Patent Office
Office européen des brevets

(11) **EP 4 304 907 B1**

(12) **EUROPÄISCHE PATENTSCHRIFT**

(45) Veröffentlichungstag und Bekanntmachung des Hinweises auf die Patenterteilung:
**18.03.2026 Patentblatt 2026/12**

(21) Anmeldenummer: **22727318.2**

(22) Anmeldetag: **05.05.2022**

(51) Internationale Patentklassifikation (IPC):
**B60W 40/06** (2012.01)   **B60W 50/14** (2020.01)
**B60W 40/064** (2012.01)   **B60L 15/32** (2006.01)
**B60K 1/02** (2006.01)   **B60T 8/00** (2006.01)

(52) Gemeinsame Patentklassifikation (CPC):
**B60W 40/06; B60T 8/171; B60T 8/172; B60T 8/174; B60T 17/22; B60W 40/064; B60W 50/14;** B60K 1/00; B60K 2001/001; B60L 2240/421; B60L 2240/461; B60L 2240/64; B60L 2240/645; B60L 2240/647; B60L 2260/46;
(Forts.)

(86) Internationale Anmeldenummer:
**PCT/EP2022/062091**

(87) Internationale Veröffentlichungsnummer:
**WO 2022/238220 (17.11.2022 Gazette 2022/46)**

(54) **VERFAHREN UND VORRICHTUNG ZUM BESTIMMEN MINDESTENS EINER FAHRBAHNEIGENSCHAFT FÜR EIN ELEKTROFAHRZEUG, SOWIE ELEKTROFAHRZEUG**

METHOD AND DEVICE FOR DETERMINING AT LEAST ONE ROAD CHARACTERISTIC IN AN ELECTRIC VEHICLE, AND ELECTRIC VEHICLE

PROCÉDÉ ET DISPOSITIF DE DÉTERMINATION, PAR UN VÉHICULE ÉLECTRIQUE, D'AU MOINS UNE CARACTÉRISTIQUE DE LA CHAUSSÉE, AINSI QUE VÉHICULE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2021 DE 102021204823**

(43) Veröffentlichungstag der Anmeldung:
**17.01.2024 Patentblatt 2024/03**

(73) Patentinhaber: **VOLKSWAGEN AKTIENGESELLSCHAFT**
**38440 Wolfsburg (DE)**

(72) Erfinder: **WEBER, Bastian**
**30161 Hannover (DE)**

(56) Entgegenhaltungen:
**EP-A1- 2 933 161   DE-A1- 102018 112 993**
**US-A1- 2017 313 299**

EP 4 304 907 B1

(52) Gemeinsame Patentklassifikation (CPC): (Forts.)
B60T 2210/10; B60T 2210/14; B60W 2050/0041;
B60W 2050/0052; B60W 2050/0057;
B60W 2050/0059; B60W 2510/081;
B60W 2510/082; B60W 2520/263; B60W 2520/266;
B60W 2520/28; B60W 2556/45

**Beschreibung**

Die Erfindung betrifft ein Verfahren und eine Vorrichtung zum Bestimmen mindestens einer Fahrbahneigenschaft für ein Elektrofahrzeug.

Aus der US 2016/0221581 A1 ist ein Verfahren zum Klassifizieren einer Straßenoberfläche bekannt, die von einem Fahrzeug befahren wird. Das Verfahren umfasst das Empfangen eines oder mehrerer elektrischer Signale, die jeweils für eine Vibration stehen, die von einem vom Fahrzeug getragenen Sensor erfasst wird. Das Verfahren umfasst ferner das Identifizieren eines Musters in der erfassten Schwingung, die durch das eine oder die mehreren Signale dargestellt wird, für mindestens eines der empfangenen elektrischen Signale und das Anpassen des identifizierten Musters an eines von einem oder mehreren bekannten Mustern, wobei jedes bekannte Muster einer jeweiligen Straßenoberflächenklassifizierung entspricht. Das Verfahren umfasst ferner das Klassifizieren der Straßenoberfläche gemäß der Straßenoberflächenklassifizierung entsprechend dem bekannten Muster, das mit dem identifizierten Muster übereinstimmt. Ein System, das einen oder mehrere von dem Fahrzeug getragene Sensoren umfasst, die zum Erfassen einer Vibration konfiguriert sind, und ein Musterklassifizierungssystem zum Durchführen des oben beschriebenen Verfahrens sind ebenfalls beschrieben.

Aus der US 2002/0162389 A1 ist ein Verfahren zum Schätzen eines Fahrzeugfahrzustands bekannt. Hierbei wird der Ausgangspegel (Vibrationspegel) der Vibration eines Abschnitts unterhalb der Feder eines Fahrzeugs, der von einem Vibrationssensor erfasst wird, der an dem Abschnitt unterhalb der Feder des Fahrzeugs angebracht ist, durch ein Frequenzanalysemittel frequenzumgerechnet, um das Frequenzspektrum des Vibrationspegels zu erhalten. Eine Operation wird an mindestens zwei Schwingungspegeln in verschiedenen Frequenzbändern des erhaltenen Frequenzspektrums durch ein Schwingungspegelberechnungsmittel ausgeführt, und dieser berechnete Wert wird mit einer Hauptkurve verglichen, die das Frequenzspektrum des Schwingungspegels zeigt, das im Schwingungspegelspeicher gespeichert ist, um den Zustand einer Straßenoberfläche abzuschätzen und um den Fahrzustand des Fahrzeugs abzuschätzen. Ferner wird der Laufzustand jedes Reifens einschließlich des Luftdrucks des Reifens aus dem Vibrationsniveau des Abschnitts unterhalb der Feder des Fahrzeugs erfasst, um den Laufzustand des Fahrzeugs abzuschätzen, wodurch ein Multifunktionserfassungssystem zum Schätzen eines Zustands einer Fahrbahnoberfläche oder eines Laufzustands des Reifens mit einem Sensor bereitgestellt wird.

Aus der EP 2 933 161 A1 ist eine Fahrzeugzustandsdetektionsvorrichtung bekannt. Ein Teil zur Erkennung des ungefederten Zustands berechnet einen Variationsbetrag, der eine Größe der Differenz zwischen einem erfassten Winkel, der von einem Resolver-Drehwinkelsensor zur Erkennung eines Drehwinkels eines In-Rad-Motors ausgegeben wird, und einem geschätzten Winkel eines Motordrehwinkels ist. Der geschätzte Winkel kann berechnet werden, indem ein geschätzter Winkel der Motordrehung in einem Berechnungszyklus zu einem erfassten Winkel des vorherigen Berechnungszyklus addiert wird. Wenn der Betrag der Abweichung größer ist als der Schwellenwert für die Bestimmung der Fahrbahnoberfläche, bestimmt der Teil zur Erkennung des ungefederten Zustands, dass die Straße, auf der das Fahrzeug fährt, eine raue Straße ist. Infolgedessen kann die Bestimmung der Fahrbahnoberfläche mit Hilfe des Drehwinkelsensors durchgeführt werden.

Aus Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, 163 S., https://doi.org/10.15488/9140, ist ein Verfahren zum Schätzen einer Rotorlage und/oder einer Rotordrehzahl bekannt.

Der Erfindung liegt die Aufgabe zu Grunde, ein Verfahren und eine Vorrichtung zum Bestimmen mindestens einer Fahrbahneigenschaft für ein Elektrofahrzeug zu schaffen.

Die Aufgabe wird erfindungsgemäß durch ein Verfahren mit den Merkmalen des Patentanspruchs 1 und eine Vorrichtung mit den Merkmalen des Patentanspruchs 9 gelöst. Vorteilhafte Ausgestaltungen der Erfindung ergeben sich aus den Unteransprüchen.

Erfindungsgemäß wird ein Verfahren zum Bestimmen mindestens einer Fahrbahneigenschaft für ein Elektrofahrzeug zur Verfügung gestellt, wobei eine Radlage und/oder eine Raddrehzahl mindestens eines Rades des Elektrofahrzeugs mittels mindestens einer Radsensorik hochfrequent erfasst wird, wobei eine Rotorlage und/oder eine Rotordrehzahl einer mit dem mindestens einen Rad gekoppelten elektrischen Maschine mittels eines Drehgebers hochfrequent erfasst oder drehgeberlos hochfrequent geschätzt wird, wobei ausgehend von der erfassten Radlage und/oder Raddrehzahl eine Rotorlage und/oder Rotordrehzahl der elektrischen Maschine geschätzt wird, wobei aus der geschätzten Rotorlage und/oder der geschätzten Rotordrehzahl und der erfassten oder drehgeberlos geschätzten Rotorlage und/oder Rotordrehzahl ein Rotorlagefehler und/oder Rotordrehzahlfehler bestimmt wird, wobei der bestimmte Rotorlagefehler und/oder der bestimmte Rotordrehzahlfehler im zeitlichen Verlauf ausgewertet werden, und wobei ausgehend von einem Auswertungsergebnis mindestens eine Fahrbahneigenschaft bestimmt und als Fahrbahneigenschaftssignal bereitgestellt wird.

Ferner wird eine Vorrichtung zum Bestimmen mindestens einer Fahrbahneigenschaft für ein Elektrofahrzeug geschaffen, umfassend eine Auswertungseinrichtung, wobei die Auswertungseinrichtung dazu eingerichtet ist, eine mittels mindestens einer Radsensorik hochfrequent erfasste Radlage und/oder Raddrehzahl mindestens eines Rades des Elektrofahrzeugs zu empfangen, eine mittels eines Drehgebers erfasste oder drehgeberlos geschätzte Rotorlage und/oder eine mittels des Drehgebers erfasste oder drehgeberlos geschätzte Rotordrehzahl einer mit dem mindestens einen Rad gekoppelten elektrischen Maschine zu empfangen, und ausgehend von der erfassten Radlage und/oder Raddrehzahl eine Rotorlage und/oder Rotordrehzahl der elektrischen Maschine zu schätzen, aus der geschätzten Rotorlage und/oder der geschätzten Rotordrehzahl und der empfangenen erfassten oder drehgeberlos geschätzten Rotorlage und/oder Rotordrehzahl einen Rotorlagefehler und/oder Rotordrehzahlfehler zu bestimmen, den bestimmten Rotorlagefehler und/oder den bestimmten Rotordrehzahlfehler im zeitlichen Verlauf auszuwerten, und ausgehend von einem Auswertungsergebnis mindestens eine Fahrbahneigenschaft zu bestimmen und als Fahrbahneigenschaftssignal bereitzustellen.

Das Verfahren und die Vorrichtung ermöglichen es, mindestens eine Fahrbahneigenschaft über Anregungen zu bestimmen, die von einem Untergrund bzw. einer Fahrbahn über die Räder an einen Antriebsstrang des Elektrofahrzeugs übertragen werden. Dem liegt der Gedanke zugrunde, dass eine elektrische Maschine bei einem Elektrofahrzeug über ein Getriebe direkt mit den Rädern des Elektrofahrzeuges verbunden ist. Bei einem solchen Antriebsstrang wirkt ein ungleichförmiger Untergrund bzw. die Fahrbahn auf die elektrische Maschine zurück. Wenn alle Komponenten im Eingriff sind, d.h., das Getriebe ist nicht ausgekoppelt, zeigen sich Traktionseigenschaften eines ungleichförmigen Untergrundes und somit die Fahrbahneigenschaften in einer resultierenden Antriebsstrangschwingung. Da die elektrische Maschine im Vergleich zu einer Verbrennungskraftmaschine deutlich weniger eigene Anregungen generiert, lassen sich die äußeren Anregungen in Form der Antriebsstrangschwingungen deutlich einfacher einer Anregung aus einem ungleichförmigen Untergrund der Fahrbahn zuordnen. Dies erfolgt, indem eine Radlage und/oder eine Raddrehzahl mindestens eines Rades des Elektrofahrzeugs mittels mindestens einer Radsensorik hochfrequent erfasst wird. Hierbei kann beispielsweise vorgesehen sein, eine bereits für ein Antiblockiersystem (ABS) an den Rädern eingesetzte Sensorik zu verwenden. Ferner wird eine Rotorlage und/oder eine Rotordrehzahl einer mit dem mindestens einen Rad gekoppelten elektrischen Maschine mittels eines Drehgebers hochfrequent erfasst oder drehgeberlos hochfrequent geschätzt. Ausgehend von der erfassten Radlage und/oder der erfassten Raddrehzahl wird eine Rotorlage und/oder eine Rotordrehzahl der elektrischen Maschine geschätzt. Dies erfolgt insbesondere unter Berücksichtigung von zwischen dem mindestens einen Rad und der elektrischen Maschine angeordneten Übertragungselementen, wie beispielsweise einem Differential und/oder einem (Untersetzungs-)Getriebe. Aus der geschätzten Rotorlage und/oder der geschätzten Rotordrehzahl und der erfassten oder drehgeberlos geschätzten Rotorlage und/oder Rotordrehzahl wird ein Rotorlagefehler und/oder ein Rotordrehzahlfehler bestimmt. Der bestimmte Rotorlagefehler und/oder der bestimmte Rotordrehzahlfehler werden im zeitlichen Verlauf ausgewertet. Dies erfolgt insbesondere, um Schwingungen zu identifizieren. Ausgehend von einem Auswertungsergebnis dieser Auswertung wird mindestens eine Fahrbahneigenschaft bestimmt und als Fahrbahneigenschaftssignal bereitgestellt. Das Bestimmen der mindestens einen Fahrbahneigenschaft ist insbesondere durch das hochfrequente Erfassen der Radlage und/oder Raddrehzahl und das hochfrequente Erfassen oder Schätzen der Rotorlage und/oder Rotordrehzahl möglich. Hochfrequent bedeutet hierbei insbesondere, dass eine Erfassungs- bzw. Abtastfrequenz deutlich größer ist als die jeweilige Drehzahl, insbesondere um den Faktor 10 bis 1000 mal so groß. Das hochfrequente Erfassen bzw. Abtasten ermöglicht insbesondere eine zeitlich hochaufgelöste Signalverarbeitung und eine Signalverbesserung durch Filterung, insbesondere zur Rauschminderung.

Das Verfahren und die Vorrichtung haben den Vorteil, dass die mindestens eine Fahrbahneigenschaft in der Regel ohne eine zusätzliche Sensorik eingesetzt werden können, da eine Radsensorik an den Rädern in dem Elektrofahrzeug in der Regel ohnehin bereits vorhanden ist.

Eine Fahrbahneigenschaft bezeichnet insbesondere eine Eigenschaft eines Untergrunds, unabhängig davon, ob eine künstliche Fahrbahn vorhanden ist oder nicht. Die Fahrbahneigenschaft kann beispielsweise mindestens eines der folgenden Merkmale umfassen: eine Fahrbahnoberfläche, ein Fahrbahnbelag bzw. ein Untergrundmaterial (feiner/grober Asphalt, Schotter, Rollsplit, Betonplatten, Sand, Eis etc.) sowie größere Objekte auf der Fahrbahn (z.B. Steine etc.).

Eine Radlage ist insbesondere ein Radlagewinkel. Eine Rotorlage ist insbesondere ein (elektrischer) Rotorlagewinkel.

Teile der Vorrichtung, insbesondere die Auswertungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) oder feldprogrammierbares Gatterfeld (FPGA) ausgebildet sind. Die Auswertungseinrichtung kann auch Teil einer Fahrzeugsteuerung sein.

Es kann vorgesehen sein, dass die Radsensorik(en) und/oder weitere Sensoriken am Antriebstrang Teil der Vorrichtung sind.

Es kann vorgesehen sein, dass die bestimmte mindestens eine Fahrbahneigenschaft an eine Fahrzeugsteuerung übermittelt wird. Beispielsweise kann die bestimmte mindestens eine Fahrbahneigenschaft dort bei einer Traktionskontrolle berücksichtigt werden.

Es ist insbesondere vorgesehen, dass das Auswerten der hochfrequent erfassten Radlage und/oder Raddrehzahl des mindestens einen Rades und/oder die hochfrequent erfasste Rotorlage und/oder Rotordrehzahl mittels eines feldprogrammierbaren Gatterfelds (engl. fieldprogrammable gate array, FPGA) erfolgt. Insbesondere kann vorgesehen sein, dass das Auswerten mittels einer System-on-Chip-(SoC)-Architektur erfolgt, welche das feldprogrammierbare Gatterfeld umfasst. Es kann darüber hinaus vorgesehen sein, dass mittels des feldprogrammierbaren Gatterfelds im Rahmen einer geberlosen Regelung in einer Alternative auch die Rotorlage und/oder die Rotordrehzahl der elektrischen Maschine geschätzt wird. Die Rotorlage bezeichnet hierbei den Rotorlagewinkel. Insbesondere erfolgt das Schätzen hierbei auf Grundlage von hochfrequent, das heißt überabgetastet, an der elektrischen Maschine und/oder an einem diese speisenden Antriebsumrichter erfassten Strömen. Das Schätzen der Rotorlage und/oder der Rotordrehzahl ist beispielsweise in Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, 163 S., https://doi.org/10.15488/9140, beschrieben.

Durch die parallele Signalverarbeitung eines feldprogrammierbaren Gatterfeldes kann dieses mit Vorteil hochfrequent (insbesondere ~MHz) abgetastete Größen verarbeiten. Durch eine hochfrequente Abtastung lassen sich Abtast- bzw. Aliasing-Effekte als Störgrößen im Signal reduzieren. Eventuelle Rauschanteile der Sensorik können im feldprogrammierbaren Gatterfeld digital gefiltert werden, sodass ein sehr großes Signal-zu-Rausch-Verhältnis für die digitale Weiterverarbeitung bereitgestellt werden kann. Im Vergleich dazu ist ein Mikrocontroller (z.B. DSP) deutlich weniger geeignet, um hochfrequente Signale zu verarbeiten, da die erfassten Werte des DSP jeweils vom erfassenden internen Analog-Digital-Wandler (ADC) zum Prozessorkern transportiert und verarbeitet werden müssen, was zu signallaufzeitbedingten und vorverarbeitungsbedingten Verzögerungen beim Auswerten führt. Bei einem feldprogrammierbaren Gatterfeld stehen die erfassten Werte des ADC den Logikeinheiten stattdessen unmittelbar, das heißt in Echtzeit, zur Verfügung. Auch können mit feldprogrammierbaren Gatterfeldern kostengünstige ADCs ohne weitere Maßnahmen ausgewertet werden, welche einen hochfrequenten digitalen Datenstrom (Bitstrom) erzeugen können, z.B. Delta-Sigma Wandler.

Das feldprogrammierbare Gatterfeld ist insbesondere ein zur Laufzeit partiell (d.h. teilweise) umkonfigurierbares feldprogrammierbares Gatterfeld. Hierdurch ist das FPGA updatefähig. Das Umkonfigurieren erfolgt insbesondere im Wege der partiellen Umkonfiguration, bei der nur ein Teil des Gatterfeldes zur Laufzeit umkonfiguriert bzw. umprogrammiert wird, andere Teile des Gatterfeldes jedoch ihre jeweilige Konfiguration bzw. Programmierung beibehalten. Das Umkonfigurieren wird insbesondere mittels einer Konfigurationssteuerung durchgeführt, welche das Umkonfigurieren durchführt und überwacht. Zum Umkonfigurieren des mindestens einen feldprogrammierbaren Gatterfelds können insbesondere Verfahren zur automatischen Codegenerierung eingesetzt werden, wie beispielsweise der "Xilinx System Generator for DSP", welcher sowohl eine Quellcode-Modellierung als auch eine Funktionsanalyse automatisiert durchführen kann. Der "System Generator for DSP" ermöglicht beispielsweise die Modellierung von FPGA-Funktionen in einer Matlab Simulink-Umgebung, sodass die Eigenschaften gegenüber weiteren Simulink-Funktionsblöcken getestet werden können. Durch die automatische Codegenerierung kann sichergestellt werden, dass sich das feldprogrammierbare Gatterfeld identisch zur Simulink-Modellierung verhält.

Eine Konfiguration eines feldprogrammierbaren Gatterfeldes umfasst insbesondere Anweisungen, mit denen das feldprogrammierbare Gatterfeld derart programmiert werden kann, dass mittels des programmierten (bzw. konfigurierten oder umkonfigurierten) Teils des feldprogrammierbaren Gatterfeldes eine bestimmte Funktionalität zur Datenverarbeitung bereitgestellt werden kann.

Grundsätzlich kann das geberlose Schätzen der Rotorlage und/oder der Rotordrehzahl der elektrischen Maschine auch mittels eines ASIC erfolgen. Auch das Auswerten und Bestimmen der mindestens einen Fahrbahneigenschaft können mittels eines hierfür eingerichteten ASIC durchgeführt werden.

In einer Ausführungsform ist vorgesehen, dass zusätzlich eine antriebsseitige Differentialdrehzahl eines Differentials mittels eines Drehzahlsensors hochfrequent erfasst wird, wobei ausgehend von erfassten Radlagen und/oder Raddrehzahlen von über das Differential miteinander verbundenen Rädern des Elektrofahrzeugs eine antriebsseitige Differentialdrehzahl des Differentials geschätzt wird, wobei aus der geschätzten antriebsseitigen Differentialdrehzahl und der erfassten antriebsseitigen Differentialdrehzahl ein Differentialdrehzahlfehler bestimmt und beim Auswerten und Bestimmen der mindestens einen Fahrbahneigenschaft berücksichtigt wird. Hierdurch lässt sich eine Schwingung im Antriebstrang nach jeweiligen Anteilen separieren. Insbesondere lässt sich hierdurch eine Schwingung, die durch das Differential hervorgerufen wird, von einer an der elektrischen Maschine beobachteten Schwingung separieren. Es stehen dann insbesondere mehrere Fehler zur Verfügung, deren zeitlicher Verlauf zum Bestimmen der mindestens einen Fahrbahneigenschaft ausgewertet werden kann. In einem einfachen Fall kann die geschätzte antriebsseitige Differentialdrehzahl durch Mittelwertbildung aus den erfassten Drehzahlen der beiden mit dem Differential verbundenen Rädern geschätzt werden.

In einer Ausführungsform ist vorgesehen, dass ein Amplitudenspektrum und/oder ein Phasenspektrum der zeitlichen Verläufe des bestimmten Rotorlagefehlers und/oder des bestimmten Rotordrehzahlfehlers, und optional zusätzlich des bestimmten Differentialdrehzahlfehlers bestimmt wird, wobei zum Auswerten das Amplitudenspektrum und/oder das Phasenspektrum ausgewertet werden. Hierdurch können durch die Fahrbahn verursachte und in den Antriebstrang hineingetragene Anregungen besonders effizient identifiziert werden. Beispielsweise kann vorgesehen sein, eine Kurzzeit-Fourier-Transformation (engl. short-time Fourier transform, STFT) durchzuführen. Hierdurch können einzelne Frequenzanteile im Zeitverlauf identifiziert und ausgewertet werden. Da aufgrund von Fahrbahneigenschaften hervorgerufene Oberschwingungen meist kein ganzzahliges Vielfaches der Drehzahlen des Antriebsstranges ergeben, lassen diese sich einfacher von selbsterregten Antriebstrangschwingungen separieren, sofern eine Fensterfunktion der Kurzzeit-Fourier-Transformation ein Vielfaches der Periodendauer- bzw. der Umlaufzeit von einzelnen Komponenten des Antriebsstranges (Räder, Differential, Getriebe, elektrische Maschine etc.) umfasst. Selbsterregte Antriebsstrangschwingungen sind beispielsweise Anregungen aus dem Zahnkraftpegel (Vielfache von Getriebezahnzahlen) oder Anregungen aus der elektrischen Maschine (Oberschwingungen aus einer Induktionsmatrix der elektrischen Maschine / einem Reluktanzmoment, Oberschwingungen aus Flussverkettung des Läufers, Totzeiteffekt einer Umrichterspeisung etc.).

In einer Ausführungsform ist vorgesehen, dass das Auswertungsergebnis mit einer Datenbank verglichen wird, in der Auswertungsergebnisse mit Fahrbahneigenschaften verknüpft hinterlegt sind, wobei die mindestens eine Fahrbahneigenschaft ausgehend von einem Vergleichsergebnis bestimmt wird. Hierdurch kann die mindestens eine Fahrbahneigenschaft auf Grundlage von empirisch und/oder durch Simulation bestimmten Verknüpfungen eines zeitlichen Verhaltens des Rotorlagefehlers und/oder des Rotordrehzahlfehlers und/oder des Differentialdrehzahlfehlers mit verschiedenen Fahrbahneigenschaften bestimmt werden. Hierbei können insbesondere bestimmte Muster in einem bestimmten Amplitudenspektrum und/oder einem bestimmten Phasenspektrum der zeitlichen Verläufe erkannt und ausgewertet werden, um durch Vergleich ein ähnliches Muster in der Datenbank zu identifizieren und die hiermit verknüpfte(n) Fahrbahneigenschaft(en) aus der Datenbank abzurufen und bereitzustellen.

In einer Ausführungsform ist vorgesehen, dass das Auswertungsergebnis zum Bestimmen der mindestens einen Fahrbahneigenschaft mindestens einem trainierten Maschinenlernverfahren zugeführt wird, wobei das trainierte Maschinenlernverfahren dazu eingerichtet und trainiert ist, ausgehend von dem Auswertungsergebnis die mindestens eine Fahrbahneigenschaft zu schätzen. Im Rahmen einer Trainingsphase ist bzw. wird das Maschinenlernverfahren mit Hilfe eines Trainingsdatensatzes trainiert. In dem Trainingsdatensatz sind Trainingsdaten mit zugehörigen Grundwahrheiten enthalten. Die Trainingsdaten umfassen insbesondere zeitliche Verläufe eines Radlagefehlers und/oder eines Raddrehzahlfehlers und/oder eines Differentialdrehzahlfehlers, welche mit jeweils mindestens einer Fahrbahneigenschaft verknüpft sind. Die Trainingsdaten und die zugehörigen Grundwahrheiten wurden insbesondere empirisch bestimmt. Grundsätzlich können die Trainingsdaten aber auch teilweise oder vollständig durch Simulation erzeugt worden sein. Die Trainingsdaten werden dem Maschinenlernverfahren als Eingangsdaten zugeführt und das Maschinenlernverfahren schätzt als Ausgangsdaten mindestens eine Fahrbahneigenschaft. Die geschätzte Fahrbahneigenschaft wird mit der Grundwahrheit verglichen und ausgehend von einem Vergleichsergebnis werden Parameter des Maschinenlernverfahrens angepasst. Dies wird solange wiederholt, bis eine ausreichende Güte des Maschinenlernverfahrens erreicht ist. Nach der Trainingsphase wird das trainierte Maschinenlernverfahren bereitgestellt, wozu eine Strukturbeschreibung und Parameter des trainierten Maschinenlernverfahrens beispielsweise zur Anwendung in einen Speicher der Auswertungseinrichtung eingeladen werden. Das Maschinenlernverfahren ist insbesondere ein künstliches Neuronales Netz, insbesondere ein Faltungsnetz (engl. Convolutional Neural Network, CNN).

In einer Ausführungsform ist vorgesehen, dass der zeitliche Verlauf des bestimmten Rotorlagefehlers und/oder des bestimmten Rotordrehzahlfehlers und/oder des bestimmten Differentialdrehzahlfehlers gefiltert wird, um selbsterregte Antriebstrangschwingungen herauszufiltern. Dies ermöglicht eine bessere Identifikation von äußeren Anregungen, welche durch Fahrbahneigenschaften hervorgerufen werden. Es kann hierzu vorgesehen sein, dass aktuelle Parameter des Antriebsstrangs, wie beispielsweise Getriebeeigenschaften und/oder Getriebeparameter etc., ausgewertet werden, um hierdurch Frequenzen und/oder Frequenzbereiche der selbsterregten Antriebsstrangschwingungen zu identifizieren. Die identifizierten Frequenzen und/oder Frequenzbereiche werden anschließend mittels Filterung (Tiefpass, Bandpass, Hochpass etc.) gefiltert, sodass deren Anteil bei der nachfolgenden Auswertung verringert ist.

In einer Ausführungsform ist vorgesehen, dass die Maßnahmen für mindestens zwei separat angetriebene Antriebsachsen des Elektrofahrzeugs durchgeführt werden, wobei die mindestens eine Fahrbahneigenschaft unter Berücksichtigung der jeweiligen Auswertungsergebnisse bestimmt wird. Hierdurch kann die mindestens eine Fahrbahneigenschaft verbessert bestimmt werden, da Informationen von mehr als einer Antriebsachse zur Verfügung stehen.

In einer Ausführungsform ist vorgesehen, dass eine Warnmeldung in Abhängigkeit der bestimmten mindestens einen Fahrbahneigenschaft erzeugt und ausgegeben wird. Beispielsweise kann vorgesehen sein, dass dem Fahrer visuell, akustisch und/oder haptisch ein Warnsignal ausgeben wird, wenn die bestimmte mindestens eine Fahrbahneigenschaft eine Sicherheit des Elektrofahrzeugs beeinträchtigt, wobei eine aktuelle Fahrweise berücksichtigt werden kann.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird ferner auch ein Elektrofahrzeug geschaffen, umfassend mindestens eine Vorrichtung nach einer der beschriebenen Ausführungsformen. Grundsätzlich kann das Elektrofahrzeug auch ein Hybridfahrzeug sein, sofern es Zeiträume gibt, in denen es rein elektrisch betrieben wird.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Vorrichtung zum Bestimmen mindestens einer Fahrbahneigenschaft für ein Elektrofahrzeug;

Fig. 2     eine schematische Darstellung zur Verdeutlichung eines Beispiels zum Bestimmen des Rotordrehzahlfehlers;

Fig. 3     eine schematische Darstellung zur Verdeutlichung der Entstehung von Anregungen durch Fahrbahneigenschaften bzw. Eigenschaften eines Untergrundes;

Fig. 4     eine schematische Darstellung zur Verdeutlichung einer Ausführungsform des Verfahrens und der Vorrichtung;

Fig. 5     eine weitere schematische Darstellung zur Verdeutlichung der Ausführungsform des Verfahrens und der Vorrichtung;

Fig. 6     eine schematische Darstellung zur Verdeutlichung einer Kurzzeit-Fourier-Transformation;

Fig. 7     ein schematisches Ablaufdiagramm einer Ausführungsform des Verfahrens zum Bestimmen mindestens einer Fahrbahneigenschaft für ein Elektrofahrzeug.

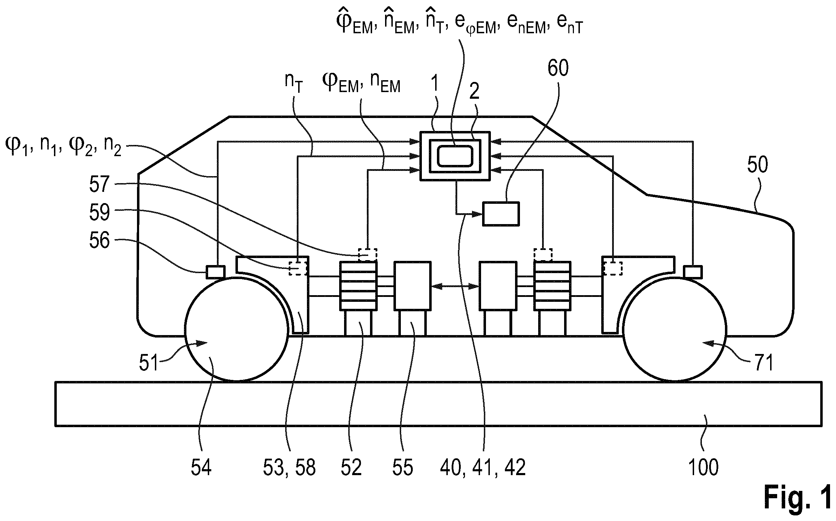

In Fig. 1 ist eine schematische Darstellung einer Ausführungsform der Vorrichtung 1 zum Bestimmen mindestens einer Fahrbahneigenschaft 40 für ein Elektrofahrzeug 50 gezeigt. Die Vorrichtung 1 ist in dem Elektrofahrzeug 50 angeordnet.

Das Elektrofahrzeug 50 umfasst an einer hinteren Antriebsachse 51 eine elektrische Maschine 52, die über ein (Untersetzungs-)Getriebe 53 mit Rädern 54 der Hinterachse 51 verbunden ist. Die elektrische Maschine 52 wird mittels eines Antriebsumrichters 55 angesteuert.

Das Elektrofahrzeug 50 weist ferner an den Rädern 54 der Hinterachse 51 jeweils eine Radsensorik 56 auf, welche der Übersichtlichkeit halber nur für ein Rad 54 gezeigt ist. Mittels der Radsensorik 56 wird eine Radlage $\varphi_1$ und/oder Raddrehzahl $n_1$ des Rades 54 hochfrequent erfasst und als entsprechendes Signal an die Vorrichtung 1 übermittelt.

Eine Rotorlage $\varphi_{EM}$ und/oder eine Rotordrehzahl $n_{EM}$ wird mittels eines Drehgebers 57 an der elektrischen Maschine 52 hochfrequent erfasst und als entsprechendes Signal an die Vorrichtung 1 übermittelt. Alternativ kann die Rotorlage $\varphi_{EM}$ und/oder die Rotordrehzahl $n_{EM}$ auch geschätzt werden, insbesondere im Rahmen einer drehgeberlosen Regelung der elektrischen Maschine 52, wie dies beispielsweise in Bastian Weber, Positionsgeberlose Regelung von permanentmagneterregten Synchronmaschinen bei kleinen Drehzahlen mit überabtastender Stromerfassung, Hannover, Gottfried Wilhelm Leibniz Universität Hannover, Dissertation, 2018, beschrieben ist.

Die Vorrichtung 1 umfasst eine Auswertungseinrichtung 2. Die Auswertungseinrichtung 2 ist dazu eingerichtet, die mittels der Radsensorik 56 hochfrequent erfasste Radlage $\varphi_1$ und/oder Raddrehzahl $n_1$ des Rades 54 zu empfangen. Die Auswertungseinrichtung 2 empfängt ferner die mittels des Drehgebers 57 erfasste oder alternativ die drehgeberlos geschätzte Rotorlage $\varphi_{EM}$ und/oder die mittels des Drehgebers 57 erfasste oder die drehgeberlos geschätzte Rotordrehzahl $n_{EM}$ der mit dem Rad 54 gekoppelten elektrischen Maschine 52.

Ausgehend von der empfangenen Radlage $\varphi_1$ und/oder Raddrehzahl $n_1$ schätzt die Auswertungseinrichtung 2 eine Rotorlage $\hat{\varphi}_{EM}$ und/oder Rotordrehzahl $\hat{n}_{EM}$ der elektrischen Maschine 52.

Aus der geschätzten Rotorlage $\hat{\varphi}_{EM}$ und/oder der geschätzten Rotordrehzahl $\hat{n}_{EM}$ und der empfangenen erfassten oder drehgeberlos geschätzten Rotorlage $\varphi_{EM}$ und/oder Rotordrehzahl $n_{EM}$ bestimmt die Auswertungseinrichtung 2 einen Rotorlagefehler $e_{\varphi EM}$ und/oder Rotordrehzahlfehler $e_{nEM}$.

Die Auswertungseinrichtung 2 wertet den bestimmten Rotorlagefehler $e_{\varphi EM}$ und/oder den bestimmten Rotordrehzahlfehler $e_{nEM}$ im zeitlichen Verlauf aus und bestimmt ausgehend von einem Auswertungsergebnis mindestens eine Fahrbahneigenschaft 40. Hierzu können insbesondere Muster im zeitlichen Verlauf erkannt werden und zum Bestimmen der mindestens einen Fahrbahneigenschaft mit Mustern, die für bekannte Fahrbahneigenschaften auftreten, verglichen werden. Die bestimmte mindestens eine Fahrbahneigenschaft 40 und als Fahrbahneigenschaftssignal 41 bereitgestellt, beispielsweise in Form eines analogen oder digitalen Signals, beispielsweise als digitales Datenpaket. Die mindestens eine Fahrbahneigenschaft 40 wird anschließend beispielsweise einer Fahrzeugsteuerung 60 zugeführt, welche beispielsweise eine Traktionskontrolle durchführt.

Es kann vorgesehen sein, dass eine Warnmeldung 42 in Abhängigkeit der bestimmten mindestens einen Fahrbahneigenschaft 40 erzeugt und ausgegeben wird. Dies erfolgt, beispielsweise, wenn die mindestens eine Fahrbahneigenschaft 40 einen Fahrer des Elektrofahrzeugs 50 zu einer weniger aggressiven oder weniger sportlichen Fahrweise veranlassen soll.

Die Auswertungseinrichtung 2 wird insbesondere zumindest teilweise mittels eines feldprogrammierbaren Gatterfeldes (nicht gezeigt) bereitgestellt. Insbesondere ist das feldprogrammierbare Gatterfeld Teil einer System-on-Chip-(SoC)-Architektur. Hierdurch ist eine schnelle Verarbeitung und Auswertung der hochfrequent erfassten und/oder geschätzten Größen möglich.

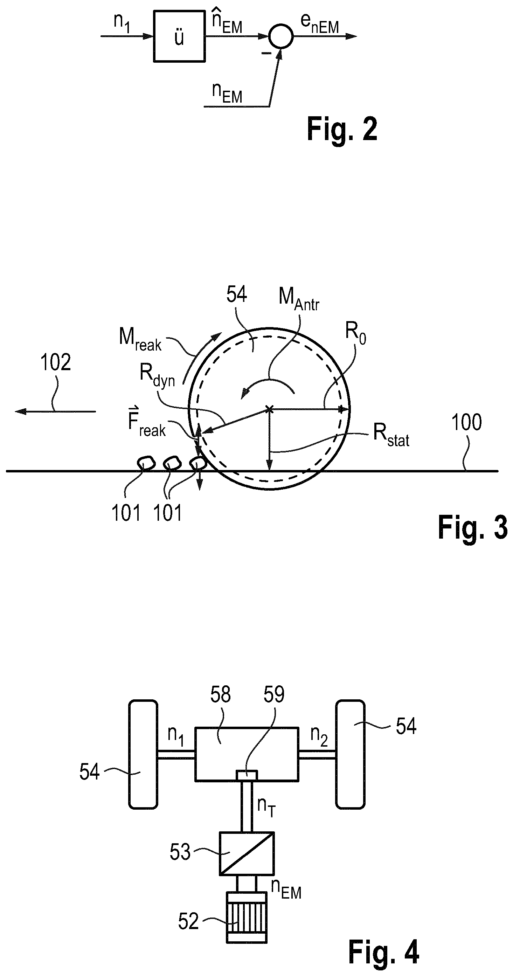

In der Fig. 2 ist das Bestimmen des Rotordrehzahlfehlers $e_{nEM}$ schematisch an einem Beispiel verdeutlicht. Ausgehend von der erfassten Raddrehzahl $n_1$ wird mit Hilfe eines Übersetzungsverhältnisses ü, welches eine Übersetzung des Getriebes 53 (Fig. 1) beschreibt, eine Rotordrehzahl $\hat{n}_{EM}$ der elektrischen Maschine 52 geschätzt. Durch Differenzbildung zwischen der derart geschätzten Rotordrehzahl $\hat{n}_{EM}$ und der erfassten Rotordrehzahl $n_{EM}$ wird der Rotordrehzahlfehler $e_{nEM}$ bestimmt. Das Bestimmen des Rotorlagefehlers erfolgt grundsätzlich analog hierzu.

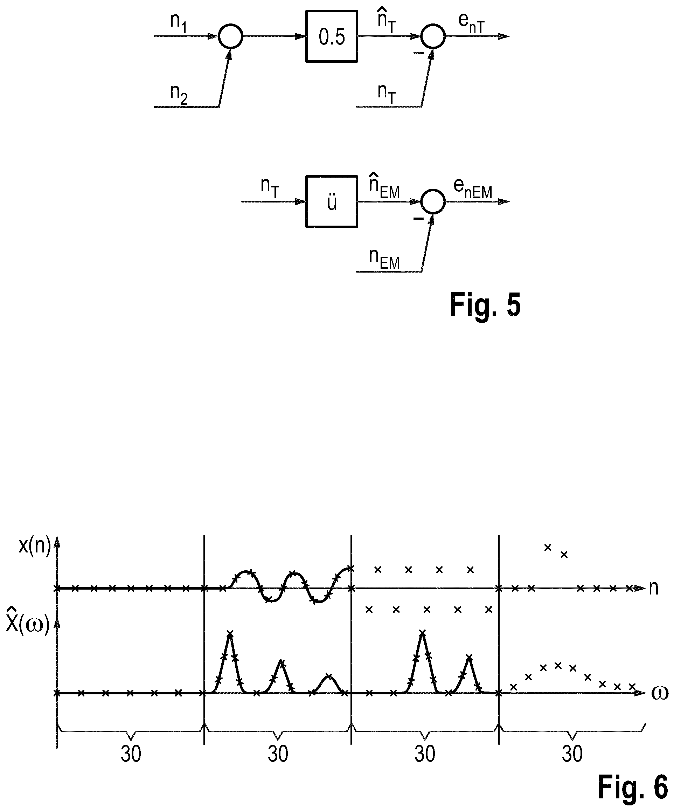

Es kann vorgesehen sein, dass eine antriebsseitige Differentialdrehzahl $n_T$ eines Differentials 58 (Fig. 1) mittels eines Drehzahlsensors 59 hochfrequent erfasst wird, wobei ausgehend von erfassten Radlagen $\varphi_1$, $\varphi_2$ und/oder Raddrehzahlen $n_1$, $n_2$ von über das Differential 58 miteinander verbundenen Rädern 54 des Elektrofahrzeugs 50 eine antriebsseitige Differentialdrehzahl $\hat{n}_T$ des Differentials 58 geschätzt wird, wobei aus der geschätzten antriebsseitigen Differentialdrehzahl $\hat{n}_T$ und der erfassten antriebsseitigen Differentialdrehzahl $n_T$ ein Differentialdrehzahlfehler $e_{nT}$ bestimmt (vgl. Figuren 4 und 5) und beim Auswerten und Bestimmen der mindestens einen Fahrbahneigenschaft 40 berücksichtigt wird.

Es kann vorgesehen sein, dass die Maßnahmen für mindestens zwei separat angetriebene Antriebsachsen 51, 71 des Elektrofahrzeugs 50 durchgeführt werden, wobei die mindestens eine Fahrbahneigenschaft 40 unter Berücksichtigung der jeweiligen Auswertungsergebnisse bestimmt wird. Das Vorgehen für die Antriebsachse 71 ist hierbei analog zu dem vorstehend mit Bezug auf die Antriebsachse 51 beschriebenen Vorgehen. Die in der Fig. 1 mit Bezug auf die Antriebsachse 71 dargestellten Komponenten sind daher nicht gesondert mit Bezugszeichen versehen.

In Fig. 3 ist eine schematische Darstellung zur Verdeutlichung der Entstehung von Anregungen durch Fahrbahneigenschaften bzw. Eigenschaften eines Untergrundes 100 gezeigt. Hierzu wird ein Rad 54 mit einem Fertigungshalbmesser $R_0$ modelliert. Aufgrund von Gewichtskräften ist das Rad 54 an einer Aufstellfläche abgeflacht, woraus sich ein stationärer Radhalbmesser $R_{stat}$ ergibt. Der dynamische Radhalbmesser $R_{dyn}$ ergibt sich aus Abrollversuchen.

Auf das Rad 54 wirkt ein Antriebsmoment $M_{Antr}$. Aufgrund von Unebenheiten auf der Fahrbahn 100 bzw. dem Untergrund (hier durch Steine 101 symbolisiert) kommt es beim Abrollen in eine Fahrtrichtung 102 zu Reaktionskräften $\vec{F}_{reak}$ am Rad 54 und es resultiert ein Reaktionsmoment $M_{reak}$. Ist die Anregung auf das Rad 54 durch die Fahrbahn 100 klein, so ist auch das Reaktionsmoment $M_{reak}$ klein. Die dargestellten Steine 101 können deutlich kleiner sein, beispielsweise können diese als feiner Rollsplit ausgebildet sein. Da die Vorrichtung 1 (Fig. 1) aber durch die hochfrequente Abtastung eine hohe Auflösung aufweist, können auch kleine Anregungen erkannt werden. Da das Reaktionsmoment $M_{reak}$ nicht direkt erfasst werden kann, wird stattdessen die Reaktion des Antriebsstranges ausgewertet. Das Reaktionsmoment $M_{reak}$ verursacht eine Oberschwingung im Antriebsstrang, welche mittels des in dieser Offenbarung beschriebenen Verfahrens ausgewertet wird.

Die Figuren 4 und 5 verdeutlichen eine Ausführungsform des Verfahrens und der Vorrichtung 1 (Fig. 1), in der vorgesehen ist, dass eine antriebsseitige Differentialdrehzahl $n_T$ eines Differentials 58 (Umlaufradträger) mittels eines Drehzahlsensors 59 (Fig. 1) hochfrequent erfasst wird. Ausgehend von erfassten Raddrehzahlen $n_1$, $n_2$ von über das Differential 58 miteinander verbundenen Rädern 54 des Elektrofahrzeugs wird eine antriebsseitige Differentialdrehzahl $\hat{n}_T$ des Differentials 58 geschätzt, wobei aus der geschätzten antriebsseitigen Differentialdrehzahl $\hat{n}_T$ und der erfassten antriebsseitigen Differentialdrehzahl $n_T$ ein Differentialdrehzahlfehler $e_{nT}$ bestimmt und beim Auswerten und Bestimmen der mindestens einen Fahrbahneigenschaft berücksichtigt wird.

Dies ist in Fig. 5 verdeutlicht. Die erfassten Raddrehzahlen $n_1$, $n_2$ werden dazu verwendet, um die antriebsseitige Differentialdrehzahl $\hat{n}_T$ zu schätzen, im gezeigten Beispiel über die Gleichung:

$$\hat{n}_T = \frac{1}{2}(n_1 + n_2)$$

Anschließend wird der Differentialdrehzahlfehler $e_{nT}$ bestimmt, indem die Differenz zwischen der geschätzten antriebsseitigen Differentialdrehzahl $\hat{n}_T$ und der erfassten antriebsseitigen Differentialdrehzahl $n_T$ gebildet wird.

Aus der erfassten antriebsseitigen Differentialdrehzahl $n_T$ wird mit Hilfe eines Übersetzungsverhältnisses ü, welche eine Übersetzung des Getriebes 53 (Fig. 4) beschreibt, eine Rotordrehzahl $\hat{n}_{EM}$ der elektrischen Maschine 52 (Fig. 4) geschätzt. Durch Differenzbildung zwischen der derart geschätzten Rotordrehzahl $\hat{n}_{EM}$ und der erfassten Rotordrehzahl $n_{EM}$ wird der Rotordrehzahlfehler $e_{nEM}$ bestimmt.

Der bestimmte Rotordrehzahlfehler $e_{nEM}$ wird im zeitlichen Verlauf ausgewertet, wobei ausgehend von einem Auswertungsergebnis die mindestens eine Fahrbahneigenschaft bestimmt und als Fahrbahneigenschaftssignal bereitgestellt wird.

Zusätzlich wird in dieser Ausführungsform auch der Differentialdrehzahlfehler $e_{nT}$ im zeitlichen Verlauf ausgewertet, wobei das Auswertungsergebnis beim Bestimmen der mindestens einen Fahrbahneigenschaft berücksichtigt wird.

In der Fig. 6 ist eine schematische Darstellung zur Verdeutlichung einer Ausführungsform des Verfahrens und der Vorrichtung 1 (Fig. 1) gezeigt. In der Ausführungsform, die ansonsten wie die in der Fig. 1 gezeigte Ausführungsform ausgestaltet ist, ist vorgesehen, dass ein Amplitudenspektrum und/oder ein Phasenspektrum der zeitlichen Verläufe des bestimmten Rotorlagefehlers und/oder des bestimmten Rotordrehzahlfehlers und/oder des bestimmten Differentialdrehzahlfehlers bestimmt wird, wobei zum Auswerten das Amplitudenspektrum und/oder das Phasenspektrum ausgewertet werden. Hierzu wird insbesondere eine Kurzzeit-Fourier-Transformation verwendet, welche im kontinuierlichen Fall mathematisch wie folgt formuliert werden kann:

$$X(z, \omega) = \int_{-\infty}^{\infty} x(t) \, w(t-z) \, e^{-i\omega t} \, dt$$

wobei $w(\cdot)$ eine Fensterfunktion mit einer Verschiebungszeit z bezeichnet. Die Verschiebungszeit z wird insbesondere derart gewählt, dass diese ein Vielfaches einer Umlaufzeit eines Rades 54 (Fig. 1) beträgt, beispielsweise um den Faktor 10, 50 oder 100 größer ist als die Umlaufzeit. Im diskreten Fall, der bei dieser Ausführungsform aufgrund der digitalisierten hochfrequent erfassten oder geschätzten Messwerte zur Anwendung kommt, lautet die Kurzzeit-Fourier-Transformation mathematisch wie folgt:

$$X(m, \omega) = \sum_{n=-\infty}^{\infty} x(n) \, w(n-m) \, e^{-i\omega n}$$

In der Fig. 6 ist zur Verdeutlichung oben ein diskretes Signal $x(n)$ über den einzelnen diskreten Zeitpunkten $n$ dargestellt. Darunter ist die Kurzzeit-Fourier-Transformierte $X(\omega)$ in Form von abschnittsweisen Amplitudenspektren 30 des Signals $x(n)$ über der Kreisfrequenz $\omega$ dargestellt. Ist das Signal Null, so ist auch das transformierte Signal Null. Je nach Frequenzanteilen, die in dem Signal $x(n)$ enthalten sind, ändert sich entsprechend auch das jeweils zugehörige Amplitudenspektrum 30. Die Darstellung ist lediglich beispielhaft zur Verdeutlichung gewählt. Bei einer realen Auswertung können das Signal $x(n)$ und die Kurzzeit-Fourier-Transformierte $X(\omega)$ deutlich komplexer ausgebildet sein.

Es kann vorgesehen sein, dass das Auswertungsergebnis, insbesondere ein Amplitudenspektrum und/oder Phasenspektrum, mit einer Datenbank verglichen wird, in der Auswertungsergebnisse mit Fahrbahneigenschaften 40 verknüpft hinterlegt sind, wobei die mindestens eine Fahrbahneigenschaft 40 ausgehend von einem Vergleichsergebnis bestimmt wird. Die Datenbank wurde beispielsweise empirisch bestimmt und ist beispielsweise in einem Speicher der der Auswertungseinrichtung 2 (Fig. 1) hinterlegt.

Es kann ferner vorgesehen sein, dass das Auswertungsergebnis, insbesondere ein Amplitudenspektrum und/oder Phasenspektrum, zum Bestimmen der mindestens einen Fahrbahneigenschaft 40 mindestens einem trainierten Maschinenlernverfahren zugeführt wird, wobei das trainierte Maschinenlernverfahren dazu eingerichtet und trainiert ist, ausgehend von dem Auswertungsergebnis die mindestens eine Fahrbahneigenschaft 40 zu schätzen. Das Maschinenlernverfahren ist insbesondere ein künstliches Neuronales Netz, insbesondere ein Faltungsnetz. Das trainierte Maschinenlernverfahren wird mittels der Auswertungseinrichtung 2 (Fig. 1) bereitgestellt.

Es kann vorgesehen sein, dass der zeitliche Verlauf des bestimmten Rotorlagefehlers $e_{\varphi EM}$ (Fig. 1) und/oder des bestimmten Rotordrehzahlfehlers $e_{nEM}$ (Fig. 1) und/oder des bestimmten Differentialdrehzahlfehlers $e_{nT}$ (Fig. 1) gefiltert wird, um selbsterregte Antriebstrangschwingungen herauszufiltern. Hierzu werden beispielsweise Frequenzen und/oder Frequenzbereiche im Amplitudenspektrum 30 (Fig. 6), bei denen bekannt ist, dass selbsterregte Antriebstrangschwingungen in diesen Frequenzbereichen auftreten, beim Auswerten nicht berücksichtigt. Beispielsweise würden die Informationen bei diesen Frequenzen bzw. aus diesen Frequenzbereichen nicht einem Maschinenlernverfahren als Eingangsdaten zugeführt werden, sondern nur die Informationen der restlichen Frequenzbereiche. Auch bei einem Vergleich mit einer Datenbank würden die Informationen aus diesen Frequenzbereichen beim Vergleich nicht berücksichtigt werden.

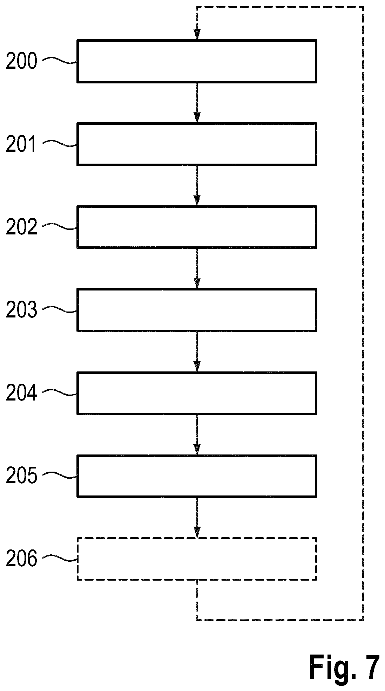

In Fig. 7 ist ein schematisches Ablaufdiagramm einer Ausführungsform des Verfahrens zum Bestimmen mindestens einer Fahrbahneigenschaft für ein Elektrofahrzeug gezeigt. Das Verfahren wird insbesondere mittels einer Ausführungsform der Vorrichtung ausgeführt, wie diese in der Fig. 1 gezeigt ist.

In einer Maßnahme 200 wird eine Radlage und/oder eine Raddrehzahl mindestens eines Rades des Elektrofahrzeugs mittels mindestens einer Radsensorik hochfrequent erfasst.

In einer Maßnahme 201 wird eine Rotorlage und/oder eine Rotordrehzahl einer mit dem mindestens einen Rad gekoppelten elektrischen Maschine mittels eines Drehgebers hochfrequent erfasst oder drehgeberlos hochfrequent geschätzt.

In einer Maßnahme 202 wird ausgehend von der erfassten Radlage und/oder Raddrehzahl eine Rotorlage und/oder Rotordrehzahl der elektrischen Maschine mittels einer Auswertungseinrichtung geschätzt.

In einer Maßnahme 203 wird aus der geschätzten Rotorlage und/oder der geschätzten Rotordrehzahl und der erfassten oder drehgeberlos geschätzten Rotorlage und/oder Rotordrehzahl ein Rotorlagefehler und/oder Rotordrehzahlfehler bestimmt.

In einer Maßnahme 204 wird oder werden der bestimmte Rotorlagefehler und/oder der bestimmte Rotordrehzahlfehler im zeitlichen Verlauf ausgewertet.

Es kann in der Maßnahme 204 vorgesehen sein, dass ein Amplitudenspektrum und/oder ein Phasenspektrum der zeitlichen Verläufe des bestimmten Rotorlagefehlers und/oder des bestimmten Rotordrehzahlfehlers, und optional zusätzlich des bestimmten Differentialdrehzahlfehlers bestimmt wird, wobei zum Auswerten das Amplitudenspektrum und/oder das Phasenspektrum ausgewertet werden. Beispielsweise können einzelne Frequenzen oder Frequenzbereiche nach Signalen und/oder Mustern abgesucht werden und/oder eine Amplitude und/oder eine Phasenlage bei bestimmten Frequenzen und/oder in bestimmten Frequenzbereichen ausgewertet werden.

Es kann ferner in der Maßnahme 204 vorgesehen sein, dass der zeitliche Verlauf des bestimmten Rotorlagefehlers und/oder des bestimmten Rotordrehzahlfehlers und/oder des bestimmten Differentialdrehzahlfehlers gefiltert wird, um selbsterregte Antriebstrangschwingungen herauszufiltern. Das Auswertungsergebnis umfasst dann insbesondere nicht mehr die herausgefilterten Anteile.

In einer Maßnahme 205 ist vorgesehen, dass ausgehend von einem Auswertungsergebnis mindestens eine Fahrbahneigenschaft bestimmt und als Fahrbahneigenschaftssignal bereitgestellt wird. Das Fahrbahneigenschaftssignal kann sowohl analog als auch digital ausgebildet sein, beispielsweise in Form eines digitalen Datenpakets, das die mindestens eine Fahrbahneigenschaft beschreibt.

Es kann in der Maßnahme 205 vorgesehen sein, dass das Auswertungsergebnis mit einer Datenbank verglichen wird, in der Auswertungsergebnisse mit Fahrbahneigenschaften verknüpft hinterlegt sind, wobei die mindestens eine Fahrbahneigenschaft ausgehend von einem Vergleichsergebnis bestimmt wird. Beispielsweise kann eine Ausprägung von Amplituden und/oder Phasen über das Frequenzspektrum hinweg mit Einträgen, beispielsweise mit Mustern, in der Datenbank verglichen werden, um Übereinstimmungen zu finden und hieraus die mindestens eine Fahrbahneigenschaft abzuleiten.

Ferner kann in der Maßnahme 205 vorgesehen sein, dass das Auswertungsergebnis zum Bestimmen der mindestens einen Fahrbahneigenschaft mindestens einem trainierten Maschinenlernverfahren zugeführt wird, wobei das trainierte Maschinenlernverfahren dazu eingerichtet und trainiert ist, ausgehend von dem Auswertungsergebnis die mindestens eine Fahrbahneigenschaft zu schätzen. Insbesondere werden dem trainierten Maschinenlernverfahren, beispielsweise einem trainierten künstlichen Neuronalen Netz, ein Amplitudenspektrum und/oder ein Phasenspektrum als Eingangsdaten zugeführt. Das trainierte Maschinenlernverfahren schätzt dann ausgehend hiervon die mindestens eine Fahrbahneigenschaft. Das trainierte Maschinenlernverfahren kann insbesondere Muster und/oder Merkmale in einem Auswertungsergebnis, beispielsweise einem Amplitudenspektrum und/oder Phasenspektrum, erkennen und anhand der erkannten Muster und/oder Merkmale die mindestens eine Fahrbahneigenschaft schätzen.

In einer Maßnahme 206 kann vorgesehen sein, dass eine Warnmeldung in Abhängigkeit der bestimmten mindestens einen Fahrbahneigenschaft erzeugt und ausgegeben wird.

Anschließend können die Maßnahmen 200 bis 206 wiederholt werden, sodass fortlaufend eine aktuelle mindestens eine Fahrbahneigenschaft bestimmt und bereitgestellt werden kann.

## Bezugszeichenliste

| | |
|---|---|
| 1 | Vorrichtung |
| 2 | Auswertungseinrichtung |
| 30 | Amplitudenspektrum |
| 40 | Fahrbahneigenschaft |
| 41 | Fahrbahneigenschaftssignal |
| 42 | Warnmeldung |
| 50 | Elektrofahrzeug |
| 51 | Antriebsachse |
| 52 | elektrische Maschine |
| 53 | Getriebe |
| 54 | Rad |
| 55 | Antriebsumrichter |
| 56 | Radsensorik |
| 57 | Drehgeber |
| 58 | Differential |
| 59 | Drehzahlsensor |
| 60 | Fahrzeugsteuerung |
| 71 | Antriebsachse |
| 100 | Fahrbahn |
| 101 | Stein |
| 200-205 | Maßnahmen |
| $e_{\varphi EM}$ | Rotorlagefehler |
| $e_{nEM}$ | Rotordrehzahlfehler |
| $e_{nT}$ | Differentialdrehzahlfehler |
| $\overrightarrow{F_{reak}}$ | Reaktionskräfte |
| $\varphi_1$ | Radlage |
| $\varphi_2$ | Radlage |
| $\varphi_{EM}$ | Rotorlage |
| $\hat{\varphi}_{EM}$ | geschätzte Rotorlage |
| $M_{Antr}$ | Antriebsmoment |
| $M_{reak}$ | Reaktionsmoment |
| $n_1$ | Raddrehzahl |
| $n_2$ | Raddrehzahl |
| $n_{EM}$ | Rotordrehzahl |
| $n_T$ | Differentialdrehzahl |

$\hat{n}_{EM}$ geschätzte Rotordrehzahl
$\hat{n}_T$ geschätzte antriebsseitige Differentialdrehzahl
$R_0$ Fertigungshalbmesser (Rad)
$R_{stat}$ stationärer Radhalbmesser
$R_{dyn}$ dynamischer Radhalbmesser
ü Übersetzungsverhältnis (Getriebe)
$w(\cdot)$ Fensterfunktion
$x(n)$ Signal
$X(\omega)$ Kurzzeit-Fourier-Transformierte

**Patentansprüche**

1. Verfahren zum Bestimmen mindestens einer Fahrbahneigenschaft (40) für ein Elektrofahrzeug (50),

   wobei eine Radlage ($\varphi_1$, $\varphi_2$) und/oder eine Raddrehzahl ($n_1$, $n_2$) mindestens eines Rades (54) des Elektrofahrzeugs (50) mittels mindestens einer Radsensorik (56) hochfrequent erfasst wird,
   wobei eine Rotorlage ($\varphi_{EM}$) und/oder eine Rotordrehzahl ($n_{EM}$) einer mit dem mindestens einen Rad (54) gekoppelten elektrischen Maschine (52) mittels eines Drehgebers (57) hochfrequent erfasst oder drehgeberlos hochfrequent geschätzt wird,
   wobei ausgehend von der erfassten Radlage ($\varphi_1$, $\varphi_2$) und/oder Raddrehzahl ($n_1$, $n_2$) eine Rotorlage und/oder Rotordrehzahl ($\hat{n}_{EM}$) der elektrischen Maschine (52) geschätzt wird, wobei aus der geschätzten Rotorlage und/oder der geschätzten Rotordrehzahl ($\hat{n}_{EM}$) und der erfassten oder drehgeberlos geschätzten Rotorlage ($\varphi_{EM}$) und/oder Rotordrehzahl ($n_{EM}$) ein Rotorlagefehler ($e_{\varphi EM}$) und/oder Rotordrehzahlfehler ($e_{nEM}$) bestimmt wird, **dadurch gekennzeichnet, dass**
   der bestimmte Rotorlagefehler ($e_{\varphi EM}$) und/oder der bestimmte Rotordrehzahlfehler ($e_{nEM}$) im zeitlichen Verlauf ausgewertet werden, und wobei ausgehend von einem Auswertungsergebnis mindestens eine Fahrbahneigenschaft (40) bestimmt und als Fahrbahneigenschaftssignal (41) bereitgestellt wird.

2. Verfahren nach Anspruch 1, **dadurch gekennzeichnet, dass** eine antriebsseitige Differentialdrehzahl ($n_T$) eines Differentials (58) mittels eines Drehzahlsensors (59) hochfrequent erfasst wird, wobei ausgehend von erfassten Radlagen ($\varphi_1$, $\varphi_2$) und/oder Raddrehzahlen ($n_1$, $n_2$) von über das Differential (58) miteinander verbundenen Rädern (54) des Elektrofahrzeugs (50) eine antriebsseitige Differentialdrehzahl ($n_T$) des Differentials (58) geschätzt wird, wobei aus der geschätzten antriebsseitigen Differentialdrehzahl ($n_T$) und der erfassten antriebsseitigen Differentialdrehzahl ($n_T$) ein Differentialdrehzahlfehler ($e_{nT}$) bestimmt und beim Auswerten und Bestimmen der mindestens einen Fahrbahneigenschaft (40) berücksichtigt wird.

3. Verfahren nach Anspruch 1 oder 2, **dadurch gekennzeichnet, dass**

   i) ein Amplitudenspektrum (30) und/oder ein Phasenspektrum der zeitlichen Verläufe des bestimmten Rotorlagefehlers ($e_{\varphi EM}$) und/oder des bestimmten Rotordrehzahlfehlers ($e_{nEM}$) bestimmt wird,
   oder
   ii) ein Amplitudenspektrum (30) und/oder ein Phasenspektrum der zeitlichen Verläufe des bestimmten Rotorlagefehlers ($e_{\varphi EM}$) und/oder des bestimmten Rotordrehzahlfehlers ($e_{nEM}$) und des bestimmten Differentialdrehzahlfehlers ($e_{nT}$) bestimmt wird;

   wobei zum Auswerten das Amplitudenspektrum (30) und/oder das Phasenspektrum ausgewertet werden.

4. Verfahren nach einem der vorangegangenen Ansprüche, **dadurch gekennzeichnet, dass** das Auswertungsergebnis mit einer Datenbank verglichen wird, in der Auswertungsergebnisse mit Fahrbahneigenschaften (40) verknüpft hinterlegt sind, wobei die mindestens eine Fahrbahneigenschaft (40) ausgehend von einem Vergleichsergebnis bestimmt wird.

5. Verfahren nach einem der vorangegangenen Ansprüche, **dadurch gekennzeichnet, dass** das Auswertungsergebnis zum Bestimmen der mindestens einen Fahrbahneigenschaft (40) mindestens einem trainierten Maschinenlernverfahren zugeführt wird, wobei das trainierte Maschinenlernverfahren dazu eingerichtet und trainiert ist, ausgehend von dem Auswertungsergebnis die mindestens eine Fahrbahneigenschaft (40) zu schätzen.

6. Verfahren nach einem der vorangegangenen Ansprüche, **dadurch gekennzeichnet, dass** der zeitliche Verlauf des bestimmten Rotorlagefehlers ($e_{\varphi EM}$) und/oder des bestimmten Rotordrehzahlfehlers ($e_{nEM}$) und/oder des bestimmten Differentialdrehzahlfehlers ($e_{nT}$) gefiltert wird, um selbsterregte Antriebstrangschwingungen herauszufiltern.

7. Verfahren nach einem der vorangegangenen Ansprüche, **dadurch gekennzeichnet, dass** die Maßnahmen für mindestens zwei separat angetriebene Antriebsachsen (51,71) des Elektrofahrzeugs (50) durchgeführt werden, wobei die mindestens eine Fahrbahneigenschaft (40) unter Berücksichtigung der jeweiligen Auswertungsergebnisse bestimmt wird.

8. Verfahren nach einem der vorangegangenen Ansprüche, **dadurch gekennzeichnet, dass** eine Warnmeldung (42) in Abhängigkeit der bestimmten mindestens einen Fahrbahneigenschaft (40) erzeugt und ausgegeben wird.

9. Vorrichtung (1) zum Bestimmen mindestens einer Fahrbahneigenschaft (40) für ein Elektrofahrzeug (50), umfassend

eine Auswertungseinrichtung (2), wobei die Auswertungseinrichtung (2) dazu eingerichtet ist, eine mittels mindestens einer Radsensorik (56) hochfrequent erfasste Radlage ($\varphi_1$, $\varphi_2$) und/oder Raddrehzahl ($n_1$, $n_2$) mindestens eines Rades (54) des Elektrofahrzeugs (50) zu empfangen, eine mittels eines Drehgebers (57) erfasste oder drehgeberlos geschätzte Rotorlage ($\varphi_{EM}$) und/oder eine mittels des Drehgebers (57) erfasste oder drehgeberlos geschätzte Rotordrehzahl ($n_{EM}$) einer mit dem mindestens einen Rad (54) gekoppelten elektrischen Maschine (52) zu empfangen, und ausgehend von der erfassten Radlage ($\varphi_1$, $\varphi_2$) und/oder Raddrehzahl ($n_1$, $n_2$) eine Rotorlage ($\hat{\varphi}_{EM}$) und/oder Rotordrehzahl ($\hat{n}_{EM}$) der elektrischen Maschine (52) zu schätzen, aus der geschätzten Rotorlage ($\hat{\varphi}_{EM}$) und/oder der geschätzten Rotordrehzahl ($\hat{n}_{EM}$) und der empfangenen erfassten oder drehgeberlos geschätzten Rotorlage ($\varphi_{EM}$) und/oder Rotordrehzahl ($n_{EM}$) einen Rotorlagefehler ($e_{\varphi EM}$) und/oder Rotordrehzahlfehler ($e_{nEM}$) zu bestimmen, **dadurch gekennzeichnet, dass** die Auswertungseinrichtung weiterhin dazu ausgebildet ist, den bestimmten Rotorlagefehler ($e_{\varphi EM}$) und/oder den bestimmten Rotordrehzahlfehler ($e_{nEM}$) im zeitlichen Verlauf auszuwerten, und ausgehend von einem Auswertungsergebnis mindestens eine Fahrbahneigenschaft (40) zu bestimmen und als Fahrbahneigenschaftssignal (41) bereitzustellen.

10. Elektrofahrzeug (50), umfassend mindestens eine Vorrichtung (1) nach Anspruch 9.

**Claims**

1. Method for determining at least one roadway property (40) for an electric vehicle (50),

wherein a wheel position ($\varphi_1$, $\varphi_2$) and/or a wheel speed ($n_1$, $n_2$) of at least one wheel (54) of the electric vehicle (50) is detected at a high frequency by means of at least one wheel sensor system (56),
wherein a rotor position ($\varphi_{EM}$) and/or a rotor speed ($n_{EM}$) of an electric machine (52) coupled to the at least one wheel (54) is detected at a high frequency by means of a rotary encoder (57) or estimated at a high frequency without a rotary encoder, wherein a rotor position and/or rotor speed ($\hat{n}_{EM}$) of the electric machine (52) is estimated based on the detected wheel position ($\varphi_1$, $\varphi_2$) and/or wheel speed ($n_1$, $n_2$), wherein a rotor position error ($e_{\varphi EM}$) and/or a rotor speed error ($e_{nEM}$) is determined from the estimated rotor position and/or the estimated rotor speed ($\hat{n}_{EM}$) and from the rotor position ($\varphi_{EM}$) and/or rotor speed ($n_{EM}$) which has been detected or has been estimated without a rotary encoder, **characterized in that** the determined rotor position error ($e_{\varphi EM}$) and/or the determined rotor speed error ($e_{nEM}$) are evaluated over time, and wherein, based on an evaluation result, at least one roadway property (40) is determined and provided as a roadway property signal (41).

2. Method according to claim 1, **characterized in that** a drive-side differential speed ($n_T$) of a differential (58) is detected at a high frequency by means of a speed sensor (59), wherein a drive-side differential speed ($\hat{n}_T$) of the differential (58) is estimated based on the detected wheel positions ($\varphi_1$, $\varphi_2$) and/or wheel speeds ($n_1$, $n_2$) of the wheels (54) of the electric vehicle (50) which are connected to each other via the differential (58), wherein a differential speed error ($e_{nT}$) is determined from the estimated drive-side differential speed ($n_T$) and the detected drive-side differential speed ($n_T$), and taken into account when evaluating and determining the at least one roadway property (40).

3. Method according to claim 1 or claim 2, **characterized in that**

i) an amplitude spectrum (30) and/or a phase spectrum of the time curves of the determined rotor position error ($e_{\varphi EM}$) and/or the determined rotor speed error ($e_{nEM}$) is determined, or
ii) an amplitude spectrum (30) and/or a phase spectrum of the time curves of the determined rotor position error ($e_{\varphi EM}$) and/or the determined rotor speed error ($e_{nEM}$) and the determined differential speed error ($e_{nT}$) is determined; wherein the amplitude spectrum (30) and/or the phase spectrum are evaluated for the evaluation.

4. Method according to any of the preceding claims, **characterized in that** the evaluation result is compared with a database in which evaluation results linked to roadway properties (40) are stored, wherein the at least one roadway property (40) is determined based on a comparison result.

5. Method according to any of the preceding claims, **characterized in that** the evaluation result for determining the at least one roadway property (40) is fed to at least one trained machine learning method, wherein the trained machine learning method is designed and trained to estimate the at least one roadway property (40) based on the evaluation result.

6. Method according to any of the preceding claims, **characterized in that** the time curve of the determined rotor position error ($e_{\varphi EM}$) and/or the determined rotor speed error ($e_{nEM}$) and/or the determined differential speed error ($e_{nT}$) is filtered to filter out self-excited drivetrain vibrations.

7. Method according to any of the preceding claims, **characterized in that** the measures are carried out for at least two separately driven drive axles (51,71) of the electric vehicle (50), wherein the at least one roadway property (40) is determined taking into account the respective evaluation results.

8. Method according to any of the preceding claims, **characterized in that** a warning message (42) is generated and issued depending on the determined at least one roadway property (40).

9. Apparatus (1) for determining at least one roadway property (40) for an electric vehicle (50), comprising

an evaluation device (2), wherein the evaluation device (2) is designed to receive a wheel position ($\varphi_1$, $\varphi_2$) and/or a wheel speed ($n_1$, $n_2$) of at least one wheel (54) of the electric vehicle (50), which wheel position and wheel speed are detected at a high frequency by means of at least one wheel sensor system (56), to receive a rotor position ($\varphi_{EM}$) detected by means of a rotary encoder (57) or estimated without a rotary encoder and/or a rotor speed ($n_{EM}$) detected by means of the rotary encoder (57) or estimated without the rotary encoder, which rotor position and rotor speed are of an electric machine (52) coupled to the at least one wheel (54), and to estimate a rotor position ($\hat{\phi}_{EM}$) and/or rotor speed ($n_{EM}$) of the electric machine (52) based on the detected wheel position ($\varphi_1$, $\varphi_2$) and/or wheel speed ($n_1$, $n_2$), to determine a rotor position error ($e_{\varphi EM}$) and/or rotor speed error ($e_{nEM}$) from the estimated rotor position ($\phi_{EM}$) and/or the estimated rotor speed ($n_{EM}$) and from the received rotor position ($\varphi_{EM}$) and/or rotor speed

($n_{EM}$) which has been detected or been estimated without a rotary encoder, **characterized in that** the evaluation device is further designed to evaluate the determined rotor position error ($e_{\varphi EM}$) and/or the determined rotor speed error ($e_{nEM}$) over time, and to determine at least one roadway property (40) based on an evaluation result and to provide it as a roadway property signal (41).

10. Electric vehicle (50), comprising at least one apparatus (1) according to claim 9.

**Revendications**

1. Procédé de détermination d'au moins une propriété de chaussée (40) pour un véhicule électrique (50),

dans lequel une position de roue ($\varphi_1$, $\varphi_2$) et/ou une vitesse de rotation de roue ($n_1$, $n_2$) d'au moins une roue (54) du véhicule électrique (50) sont détectées à haute fréquence par le biais d'au moins un système de capteurs de roue (56),
dans lequel une position de rotor ($\varphi_{EM}$) et/ou une vitesse de rotation de rotor ($n_{EM}$) d'une machine électrique (52) couplée à l'au moins une roue (54) sont détectées à haute fréquence par le biais d'un codeur rotatif (57) ou estimées à haute fréquence sans codeur rotatif, dans lequel, à partir de la position de roue ($\varphi_1$, $\varphi_2$) et/ou de la vitesse de rotation de roue ($n_1$, $n_2$) détectée(s), une position de rotor et/ou une vitesse de rotation de rotor ($\hat{n}_{EM}$) de la machine électrique (52) sont estimées, dans lequel à partir la position de rotor estimée et/ou de la vitesse de rotation de rotor ($\hat{n}_{EM}$) estimée et de la position de rotor ($\varphi_{EM}$) détectée ou estimée sans codeur rotatif et/ou
de la vitesse de rotation de rotor ($n_{EM}$), une erreur de position de rotor ($e_{\varphi EM}$) et/ou une erreur de vitesse de rotation de rotor ($e_{nEM}$) sont déterminées,
**caractérisé en ce que**
l'erreur de position de rotor ($e_{\varphi EM}$) déterminée et/ou l'erreur de vitesse de rotation de rotor ($e_{nEM}$) déterminée sont évaluées selon l'évolution temporelle, et dans lequel, à partir d'un résultat d'évaluation, au moins une propriété de chaussée (40) est déterminée et mise à disposition en tant que signal de propriété de chaussée (41).

2. Procédé selon la revendication 1, **caractérisé en ce qu'**une vitesse de rotation de différentiel ($n_T$) côté entraînement d'un différentiel (58) est détectée à haute fréquence par le biais d'un capteur de vitesse de rotation (59), dans lequel, à partir de positions de roue ($\varphi_1$, $\varphi_2$) et/ou de vitesses de rotation de roue ($n_1$, $n_2$) détectées de roues (54) du véhicule électrique (50) reliées entre elles par l'intermédiaire du différentiel (58), une vitesse de rotation de différentiel ($\hat{n}_T$) côté entraînement du différentiel (58) est estimée, dans lequel une erreur de vitesse de rotation de différentiel ($e_{nT}$) est déterminée à partir de la vitesse de rotation de différentiel ($\hat{n}_T$) côté entraînement estimée et de la vitesse de rotation de différentiel ($n_T$) côté entraînement détectée et est prise en compte lors de l'évaluation et de la détermination de l'au moins une caractéristique de chaussée (40).

3. Procédé selon la revendication 1 ou 2, **caractérisé en ce que**

> i) un spectre d'amplitude (30) et/ou un spectre de phase des évolutions temporelles de l'erreur de position de rotor ($e_{\varphi EM}$) déterminée et/ou de l'erreur de vitesse de rotation de rotor ($e_{nEM}$) déterminée sont déterminés, ou
> ii) un spectre d'amplitude (30) et/ou un spectre de phase des évolutions temporelles de l'erreur de position de rotor ($e_{\varphi EM}$) déterminée et/ou de l'erreur de vitesse de rotation de rotor ($e_{nEM}$) déterminée et de l'erreur de vitesse de rotation de différentiel ($e_{nT}$) déterminée sont déterminés ;
> dans lequel le spectre d'amplitude (30) et/ou le spectre de phase sont évalués pour l'évaluation.

4. Procédé selon l'une des revendications précédentes, **caractérisé en ce que** le résultat d'évaluation est comparé à une base de données dans laquelle des résultats d'évaluation sont enregistrés en étant couplés à des propriétés de chaussée (40), dans lequel l'au moins une propriété de chaussée (40) est déterminée à partir d'un résultat de comparaison.

5. Procédé selon l'une des revendications précédentes, **caractérisé en ce que** le résultat d'évaluation pour la détermination de l'au moins une propriété de chaussée (40) est amené à au moins un procédé d'apprentissage automatique entraîné, dans lequel le procédé d'apprentissage automatique entraîné est conçu et entraîné pour estimer l'au moins une propriété de chaussée (40) à partir du résultat d'évaluation.

6. Procédé selon l'une des revendications précédentes, **caractérisé en ce que** l'évolution temporelle de l'erreur de position de rotor ($e_{\varphi EM}$) déterminée et/ou de l'erreur de vitesse de rotation de rotor ($e_{nEM}$) déterminée et/ou de l'erreur de vitesse de rotation de différentiel ($e_{nT}$) déterminée est filtrée pour éliminer par filtrage des oscillations de chaîne cinématique auto-excitées.

7. Procédé selon l'une des revendications précédentes, **caractérisé en ce que** les mesures sont réalisées pour au moins deux essieux moteurs (51, 71) entraînés séparément du véhicule électrique (50), dans lequel l'au moins une caractéristique de chaussée (40) est déterminée en tenant compte des résultats d'évaluation respectifs.

8. Procédé selon l'une des revendications précédentes,
**caractérisé en ce qu'**un message d'avertissement (42) est généré et émis en fonction de l'au moins une caractéristique de chaussée (40) déterminée.

9. Dispositif (1) de détermination d'au moins une caractéristique de chaussée (40) pour un véhicule électrique (50), comprenant

> un dispositif d'évaluation (2), dans lequel le dispositif d'évaluation (2) est conçu pour recevoir une position de roue ($\varphi_1$, $\varphi_2$) et/ou une vitesse de rotation de roue ($n_1$, $n_2$) d'au moins une roue (54) du véhicule électrique (50), détectées à haute fréquence par le biais d'au moins un système de capteurs de roue (56), une position de rotor ($\varphi_{EM}$) détectée par le biais d'un codeur rotatif (57) ou estimée sans codeur rotatif et/ou une vitesse de rotation de rotor ($n_{EM}$) détectée par le biais du codeur rotatif (57) ou estimée sans codeur rotatif d'une machine électrique (52) couplée à l'au moins une roue (54), et
> estimer, à partir de la position de roue ($\varphi_1$, $\varphi_2$) et/ou de la vitesse de roue ($n_1$, $n_2$) détectée(s), une position de rotor ($\hat{\varphi}_{EM}$) et/ou une vitesse de rotation de rotor ($\hat{n}_{EM}$) de la machine électrique (52), à partir de la position de rotor ($\hat{\varphi}_{EM}$) estimée et/ou de la vitesse de rotation de rotor ($\hat{n}_{EM}$) estimée et de la position de rotor ($\varphi_{EM}$) et/ou de la vitesse de rotation de rotor ($n_{EM}$) reçue, détectée ou estimée sans codeur rotatif, déterminer une erreur de position de rotor ($e_{\varphi EM}$) et/ou une erreur de vitesse de rotation de rotor ($e_{nEM}$),
> **caractérisé en ce que** le dispositif d'évaluation est en outre conçu pour évaluer l'erreur de position de rotor ($e_{\varphi EM}$) déterminée et/ou l'erreur de vitesse de rotation de rotor ($e_{nEM}$) déterminée dans l'évolution temporelle, et pour déterminer, à partir d'un résultat d'évaluation, au moins une propriété de chaussée (40) et la mettre à disposition en tant que signal de propriété de chaussée (41).

10. Véhicule électrique (50), comprenant au moins un dispositif (1) selon la revendication 9.

Fig. 1

$\hat{\varphi}_{EM}$, $\hat{n}_{EM}$, $\hat{n}_T$, $e_{\varphi EM}$, $e_{nEM}$, $e_{nT}$

$n_T$   $\varphi_{EM}$, $n_{EM}$   1   2   60

$\varphi_1$, $n_1$, $\varphi_2$, $n_2$

57

59

56

50

51   71

54   53, 58   52   55   40, 41, 42   100

EP 4 304 907 B1

Fig. 2

Fig. 3

Fig. 4

Fig. 5

Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160221581 A1
- US 20020162389 A1

- EP 2933161 A1

**In der Beschreibung aufgeführte Nicht-Patentliteratur**

- **BASTIAN WEBER**. *Positionsgeberlose Regelung von permanentmagneterregten Synchronmaschinen bei kleinen Drehzahlen mit überabtastender Strom-erfassung*, 2018, 163, https://doi.org/10.15488/9140

- **BASTIAN WEBER**. *Positionsgeberlose Regelung von permanentmagneterregten Synchronmaschinen bei kleinen Drehzahlen mit überabtastender Strom-erfassung*, 2018, vol. 163, https://doi.org/10.15488/9140
- **BASTIAN WEBER**. *Positionsgeberlose Regelung von permanentmagneterregten Synchronmaschinen bei kleinen Drehzahlen mit überabtastender Strom-erfassung*, 2018